# EUROPÄISCHE PATENTSCHRIFT

(11) **EP 0 506 723 B1**
(45) Veröffentlichungstag und Bekanntmachung des Hinweises auf die Patenterteilung: **10.08.1994**
(21) Anmeldenummer: 91900802.9
(22) Anmeldetag: 05.12.1990
(51) Int. Cl.: C04B 41/61, B65D 65/42

(54) **VERFAHREN ZUR OBERFLÄCHENBEHANDLUNG VON BAUTEN AUS BETON, SOWIE ENTSPRECHEND OBERFLÄCHENBEHANDELTER BAUKÖRPER**
PROCESS FOR THE SURFACE TREATMENT OF CONCRETE STRUCTURES AND TREATED STRUCTURES THUS OBTAINED
PROCEDE DE TRAITEMENT DE SURFACE DE CONSTRUCTIONS EN BETON ET CONSTRUCTIONS AINSI TRAITEES

(30) Priorität: 05.12.1989 DE 3940199
(43) Veröffentlichungstag der Anmeldung: 07.10.1992
(73) Patentinhaber: STECKER & ROGGEL BAUGESELLSCHAFT mbH, D-45884 Gelsenkirchen (DE); Gelsenwasser AG, D-45809 Gelsenkirchen (DE)
(72) Erfinder: STECKER, Werner, D-4650 Gelsenkirchen (DE); EBEL, Otto-Gerhard, D-4270 Dorsten (DE)
(74) Vertreter: Schumacher, Horst, Dr. Dipl.-Phys.
(86) Internationale Anmeldenummer: EP9002104
(87) Internationale Veröffentlichungsnummer: WO9108178

(56) Entgegenhaltungen:
- DE-C- 313 191
- FR-A- 946 870
- FR-A- 2 426 032
- US-A- 2 987 416
- Chemical Abstracts, vol. 110, No. 12, June 1989, Columbus, Ohio, USA. H. Iwamoto: "Manufacture of decorative building blocks" Ref. No. 218077S
- Chemical Abstracts, vol. 109, No. 10, September 1988, Columbus, Ohio, USA. H. Iwamato: "Decorative concrete blocks" Ref. No. 78707 and JP-A-6383353 (H. Iwamato) 14 April 1988
- Patent Office of Japan, file supplier JAPS and JP-A-1011086 (Dainippon Toryo KK) 24 January 1989

## Beschreibung

Die Erfindung betrifft ein Verfahren zur Oberflächenbehandlung nach dem Oberbegriff von Patentanspruch 1 sowie entsprechende oberflächenbehandelte Baukörper gemäß dem Oberbegriff von Patentanspruch 11. Die Erfindung eignet sich insbesondere als Betonbehältersanierungssystem für Flüssigkeitsbehälter, bei dem die innere Behälteroberfläche zunächst gereinigt und nachfolgend mit einem sich in situ bildenden Überzug aus einem zunächst in flüssiger Form vorliegenden Material versehen wird.

In der Wasserwirtschaft und anderen Industriezweigen, in denen große Flüssigkeitsmengen aufbewahrt, zwischengespeichert oder behandelt werden müssen, werden Flüssigkeitsbehälter aus Beton oder ähnlichen hydraulisch abgebundenen mineralischen Baustoffen verwendet. Nach längerer Gebrauchsdauer ist eine Sanierung erforderlich, z. B. weil die innere Behälteroberfläche chemisch oder mechanisch, wie z. B. erosiv oder durch spannungs- oder temperaturbedingte Einflüsse in Mitleidenschaft gezogen ist. Gelegentlich sind auch Risse und ähnliche Schwächungen zu sanieren. Sofern der Behälter eine Stahlbewehrung aufweist, können auch Bewehrungsteile freigelegt worden sein.

Es ist bekannt, zu dem eingangs genannten Zweck die innere Behälteroberfläche zunächst zu reinigen, ggf. Risse, Abplatzungen u. dgl. aufzufüllen und nachfolgend ein Anstrichsystem, insbesondere unter Verwendung von Kunststoffen zur Sanierung zu verwenden.

Die bekannten Sanierungssysteme weisen u. a. den Nachteil mangelnder Haftung bei größeren mechanischen oder temperaturwechselbedingten Belastungen auf. Sie sind zudem aufwendig in der Herstellung.

Aus der DE-PS 282 876 ist es bekannt, aus Beton bzw. Zement hergestellte Gefäße, wie für die chemische Großindustrie, Brauereien und ähnliche Betriebe mit einem zweischichtigen Metallüberzug, hergestellt nach dem Schoopschen Verfahren, davor zu schützen, daß alkalische Ausschwitzungen des Betons bzw. Zementes auf den Überzug oder durch diesen hindurch auf die Flüssigkeit schädlich einwirken können. Um diesen speziellen Anwendungszweck zu erfüllen, wird eine Auswahl der Metalle der beiden Überzugsschichten dahingehend getroffen, daß der mit dem Beton in Berührung tretende Teil des Metallüberzugs (innere Metallschicht) aus Eisen oder einem ähnlichen Metall und die mit der Flüssigkeit in Berührung kommende Metallschicht aus Aluminium od. dgl. besteht.

Die Anmelderinnen haben gefunden, daß diese bekannte Oberflächenbehandlung äußerst problematisch ist: Es ist - wenn überhaupt - nur unter äußerst aufwendigen Bedingungen möglich, diese beiden Metallschichten in der angegebenen Reihenfolge so aufzutragen, daß die Haftung am Boden oder Zement hinreichend groß ist. Außerdem hält die Beschichtung Längen- bzw. Volumenänderungen des Substrates, wie sie bei größerer thermischer oder Spannungs-Belastung an im Freien aufgestellten Bauten auftreten können, nicht stand. Dies wirkt sich bei dem erwähnten Anwendungsfall dieser bekannten Betonbehälterbeschichtung offenbar nicht nachteilig aus, weil sich Behälter, die der Aufbewahrung von Bier oder anderen als Genußmittel anzusprechenden Flüssigkeiten dienen, in der Regel unter relativ konstanten klimatischen Bedingungen, insbesondere in geschlossenen Gebäuden aufgestellt sind. Demgegenüber können bei im Freien aufgestellten Bauten aus Beton od. dgl. hohe Temperaturdifferenzen und andere vergleichsweise ausgeprägte Wechselbelastungen auftreten.

Aus der DE-OS 29 48 858 ist es bekannt, dekorative Oberflächeneffekte durch eine Flammspritzbehandlung mit Metallen auf solchen Gegenständen zu erreichen, die aus keramischem Material bestehen. Hierbei treten offenbar schon deshalb nur wenig Probleme auf, weil keramische Materialien bekanntermaßen eine nur relativ geringe thermische Ausdehnungsneigung besitzen.

Schließlich ist es aus der DD-Z: Schweißtechnik, Band 38 (1988) 4, Seite 168 bis 170 bekannt, für das thermische Spritzen nicht nur Metalle, sondern auch Metalloxide zu verwenden, ohne daß hierbei auf das der Erfindung zugrundeliegende Problem eingegangen wird.

Davon ausgehend liegt der Erfindung die Aufgabe zugrunde, für die gattungsgemäßen Verfahren bzw. oberflächenbehandelten Baukörper ein System zu schaffen, das den verschiedenen Belastungen derartiger Baukörper, insbesondere thermisch bedingten Längen-/Volumenänderungen und Oberflächenangriff standhält.

Die Aufgabe wird hinsichtlich des Verfahrens durch die Merkmale des Patentanspruchs 1 und hinsichtlich des Baukörpers durch die Merkmale des Patentanspruchs 11 gelöst. Die Erfindung basiert auf dem Grundgedanken, die Metallschichten durch thermisches Spritzen in der Reihenfolge auf die Oberfläche des hydraulisch abgebundenen, auf Mineralbasis aufgebauten Substrates aufzubringen, daß das hinsichtlich seiner Fähigkeit, die Substratoberfläche zu stützen, minderwertigere Metall als erstes aufgebracht wird und danach das hinsichtlich seiner Fähigkeit die Substratoberfläche zu schützen höherwertige Metall aufgebracht wird; dabei hat es sich als besonders vorteilhaft herausgestellt, zwischen dem derart aufgebauten metallischen Schutzschichtensysten und der Substratoberfläche eine Zwischenschicht aus einem insbesondere hydraulisch abbindenden Material vorzusehen.

Ein erfindungsgemäß ausgebildetes System (Verfahren und oberflächenbehandelter Baukörper hat u. a. den Vorteil, thermischen und mechanischen Belastungen, insbesondere Längen- und Volumenänderungen sowie Oberflächenangriff, wie Erosion, aggressiven Medien und Feuchtigkeit in überraschend hohem Maße standzuhalten.

Es eignet sich insbesondere zur Instandsetzung von sehr großflächigen Beton- und Stahlbeton- sowie ähnlichen -Konstruktionen, deren Funktion aus Alterung, Nutzung bzw. Klimabelastung eingeschränkt ist - und zwar auch für Wechselbelastungen, im Bereich der Trinkwasserversorgung, der Abwasserklärung, der chemischen Flüssigkeiten mit unterschiedlichsten Ph-Werten sowie für Gase und Schüttgüter sowie pastösen und breiähnlichen Stoffen. Dabei stellen klimabedingte Temperaturwechselbelastungen von delta t = 50 °C und mehr kein Problem dar. Systembedingte Haftzugspannungen der einzelnen aufzutragenden Schichten zueinander können problemlos aufeinander abgestimmt werden. Verformungen infolge mechanischer Lasten wie Biegung und Längenänderung oder auch wechselnde Verformungen werden problemlos aufgenommen. Risse im Substrat können überbrückt werden. Besonders im Lebensmittelbereich ist vollständige Eignung gegeben. Die erzielten Oberflächen sind homogen, porenarm und glatt, dampfdiffusionsfähig, jedoch wasserundurchlässig Die überzogenen Substratoberflächen können beliebig geformt und orientiert sein, wie gekrümmt, mit Ecken und Kanten versehen, senkrecht oder waagerecht. Der Einsatzbereich erstreckt sich von der Industrie, über die Wasserwirtschaft bis zum Hochbau/ Architektur, wobei auch Schutz gegen mechanische und chemische Einwirkungen, Korrosionsschutz und Verschönerung erzielt werden kann, und zwar auch an Fassaden, Brücken, Fertigteilen und ähnlichem aus Beton.

Es hat sich gezeigt, daß in den erfindungsgemäß aberflächenbehandelten Behälterwänden oder anderen hydraulisch abgebundenen Substraten auf Mineralbasis vorhandene Feuchtigkeit, insbesondere in Form von Dampf, durch den Überzug hindurchdiffundieren, während der Überzug im übrigen wasserundurchlässig ist. Dies hat zur Folge, daß der Beton als solcher nicht mehr wasserundurchlässig sein muß. Die Wasserundurchlässigkeit von Beton ist in der DIN 1045 näher erläutert. Außerdem sind erfindungsgemäß oberflächenbehandelte Substratoberflächen, insbesondere sanierte Betonoberflächen außerordentlich duktil - selbst hohe mechanische Belastungen, wie sie z. B. bei Hammerschlägen auftreten, führen in der Regel nicht zu einer nachhaltigen Schädigung der Oberfläche. Vielmehr verformt sich die Betonoberfläche gemeinsam mit dem im thermischen Spritzverfahren aufgebrachten Metallüberzug völlig gleichförmig, ohne daß es zu Beschädigungen des Metallüberzuges oder zu Ablösungen des Metallüberzuges von der Substratoberfläche kommt.

Soweit die Erfindung, wie besonders bevorzugt, an den Innenwänden von Behältern und, vor allem, als Sanierungssystem eingesetzt wird, versteht es sich, daß "Behälter" im Sinne der Erfindung u. a. auch offene Becken, Rohre oder Rohrleitungssysteme u. dgl. sein können und auch noch anderen Zwecken als der Aufbewahrung, dem Transport oder der chemischen bzw. physikalischen Bearbeitung von Flüssigkeiten dienen können. Z. B. kommen neben Flüssigkeiten auch breiförmige, pastöse oder trockene Substanzen wie Schüttgüter in Betracht.

Schließlich hat sich herausgestellt, daß das erfindungsgemäße System auch für die Erstbehandlung, also bei der Herstellung des Behälters von großem Nutzen sein kann - dann kann z. B. auch ein nicht mehr wasserundurchlässiger Beton als Substrat verwendet werden und es sind auch keine, z. B. durch eine besondere Verschalung, "veredelte" Betonoberflächen erforderlich.

Auch ist die Erfindung nicht auf das Substrat Beton beschränkt, sondern es können auch Oberflächen aus anderen hydraulisch abgebundenen Substraten auf Mineralbasis in Betracht kommen.

Es gibt nun eine Reihe von Möglichkeiten, das erfindungsgemäße System noch weiter zu verbessern. Hierzu wird einerseits auf die Unteransprüche und andererseits auf die nachfolgende Beispielsbeschreibung verwiesen:

Die innere Oberfläche eines großvolumigen Behälters aus Stahlbeton wurde zunächst durch Sandstrahlen von Verschmutzungen bzw. losen Zementteilen und losen Kies- bzw. Sandpartikeln befreit.

Die gereinigte Betonoberfläche wurde zunächst mit einer hydraulisch abbindenden, als Glättungsschicht ausgebildeten Zwischenschicht, insbesondere aus einem kunststoffvergüteten Material, wie es u. a. von Produkten, die unter der Handelsbezeichnung ANS-Produkte auf dem Markt erhältlich sind, bekannt ist, versehen, wobei dieses Material derart eingestellt und verarbeitet wurde, daß eine gewisse Restrauhigkeit der fertigen Oberfläche der Glättungsschicht erhalten wurde. Es hat sich gezeigt, daß derartige Zwischenschichten nicht nur den Aufwand beim nachfolgenden thermischen Spritzen vermindern und zu besonders hohen Oberflächengüten des metallischen Überzuges führen, sondern auch - in Verbindung mit dem erfindungsgemäßen Metallschichtenaufbau - einen besonders guten Verbund zwischen Substratoberfläche und dem erfindungsgemäßen Schichtaufbau gewährleisten und die thermischen Belastungen des Substrates in günstigen Grenzen halten.

Sodann wurden verschiedene Metalle bzw. Metallegierungen im Flammspritzverfahren in Schichten bis zu 100 µm Schichtstärke aufgetragen. Das Flammspritzverfahren für Metalle sowie die übrigen, grundsätzlich ebenfalls erfindungsgemäß geeigneten Verfahren des "thermischen Spritzens" von Metallen sind u. a. in dem Sonderdruck 96 der Firma Linde AG unter dem Titel "Übersicht und Einführung in das thermische Spritzen" von Dipl. -Ing. Peter Heinrich, Höllriegelskreuth, unter der Veröffentlichungsnummer 52/1982 (8096/9) beschrieben worden. Für die Versuchsdurchführungen wurde eine handelsübliche Allzweck-Metallspritz-Pistole verwendet, soweit drahtförmig vorliegendes Metall verarbeitet wurde. Es wurde aber auch Metallpulver verarbeitet. Metallpulver haben den Vorteil einfacherer Zusammensetzbarkeit des Ausgangsmaterials. Drahtförmig vorliegende Metalle lassen sich jedoch schneller zu großflächigen Überzügen von vielen Quadratmetern verarbeiten.

Als Metalle wurden Zink, Aluminium sowie Legierungen aus den beiden sowie verschiedene Edelstahllegierungen verarbeitet. Edelstahllegierungen haben sich für den erfindungsgemäßen Zweck als am vorteilhaftesten erwiesen. Unter Edelstahl werden im Sinne der Erfindung Legierungen vorzugsweise aus Eisen, Kohlenstoff, Mangan, Nickel und Chrom sowie ggf. weiteren Legierungsbestandteilen, wie Silizium, Phosphor und/oder Schwefel oder andere Bestandteile verstanden. Es wurde gefunden, daß zur optimalen Anpassung an den Verwendungszweck Edelstähle mit angepaßtem E-Modul besonders vorteilhaft sind, insbesondere solche, die einen vergleichsweise geringen Mangangehalt haben. Grundsätzlich unterliegt die Auswahl des Edelstahls aber keinen besonderen Ausnahmebedingungen.

Es wurden Überzüge aus mehreren, insbesondere zwei im Flammspritzverfahren aufgetragenen Schichten aus unterschiedlichen Metallen hergestellt, nämlich solche, bei denen zunächst eine Schicht aus Zink oder Aluminium oder einer Zink/Aluminium-Legierung und nachfolgend eine Schicht aus Edelstahl, insbesondere aus einem im Handel erhältlichen Draht aufgetragen wurde. Dieser Schichtenaufbau hat eine besonders günstige Anpassungsfähigkeit an das Substrat zum einen und an die Bedürfnisse der physikalischen Eigenschaften des Überzuges zum anderen. Insbesondere werden thermisch bedingte Belastungen des Betons beim Aufbringen des Überzuges vermindert. Es wird also zunächst ein Metall mit relativ niedrigerem und nachfolgend ein Metall mit relativ höherem Schmelzpunkt aufgetragen.

In weiteren Versuchsreihen wurden die erfindungsgemäßen Überzüge aus Metall mit einer Oberflächenglättungs-schicht versehen, welche ihrerseits vorzugsweise dampfdiffusionsdurchlässig war und insbesondere aus einem, insbesondere nutzungsverträglichen, Kunststoff wie beispielsweise aus einem Epoxydharz bestand. Durch derartige Oberflächenglättungsschichten wird ein Finish erzielt, das besonders gründlich und einfach zu reinigen ist, was vor allem für Trinkwasserbehälter von Bedeutung ist.

In weiteren Versuchsreihen wurde die gereinigte Betonoberfläche zunächst mit einer Zwischenschicht aus einem Material von relativ höherer Temperaturbeständigkeit als der Temperaturbeständigkeit des Betonsubstrates versehen. Hierdurch kann eine ähnliche Wirkung wie die oben beschriebene Mehrfachbeschichtung mit verschiedenen Metallen erzielt werden, wobei diese Zwischenschicht gleichzeitig als Glättungsschicht im zuvor erwähnten Sinne dienen kann. Derartige Zwischenschichten können aus einem hydraulisch abbindenden oder einem wasserglasgebundenen System bestehen, wie es u. a. in der deutschen Patentanmeldung P 39 11 117.2 beschrieben ist. Im übrigen sind derartige weitgehend temperaturbeständige Beschichtungen an sich bekannt und brauchen deshalb nicht mehr erläutert zu werden.

Schließlich wurden in weiteren Versuchsreihen bekannte Haftvermittler als Zwischenschicht zwischen der Betonoberfläche und der Glättungs- bzw. temperaturbeständigen Zwischenschicht verwendet. Derartige Heftvermittler zwischen verschiedenen hydraulisch abbindenden Systemen sind an sich bekannt und bedürfen daher keiner näheren Erläuterung.

Die bisher besten Ergebnisse bei dem Betonbehältersa-nierungssystem wurden dann erzielt, wenn das System folgende Schritte in der genannten Reihenfolge aufwies:
1. Betonoberflächenreinigung (wie Sandstrahlen)
2. Auftragen eines Haftvermittlers für hydraulisch abbindende Systeme
3. Auftragen einer dampfdiffusionsdurchlässigen Glättungsschicht
4. Auftragen einer ersten Schicht aus Zinkoxid oder Aluminiumoxid oder aus einer Zink/Aluminium-Legierung im Flammspritzverfahren unter Verwendung drahtförmigen Ausgangsmaterials
5. Auftragen einer zweiten Schicht aus Edelstahl im Flammspritzverfahren unter Verwendung drahtförmigen Ausgangsmaterials sowie ggf.
6. Auftragen einer dampfdiffusionsdurchlässigen Oberschicht

## Patentansprüche

1. Verfahren zur. Oberflächenbehandlung von Bauten aus Beton, Stahlbeton oder anderen hydraulisch abgebundenen Substraten auf Mineralbasis_{,} insbesondere von Behältern, bei dem die Oberfläche, ggf. nach einem Reinigungsschritt, mit einem mehrschichtigen Überzug versehen wird und dieser Überzug mindestens zwei Schichten aus Metall oder Metalloxid aufweist, wobei diese Schichten durch thermisches Spritzen, insbesondere im Flammspritzverfahren, aufgetragen werden,
**dadurch gekennzeichnet,** daß auf die Oberfläche zunächst eine hydraulisch abbindende oder eine wasserglasgebundene Zwischenschicht aufgetragen wird und nachfolgend ein Metall mit relativ niedrigerem und nachfolgend eine Schicht aus Edelstahl, als Metall mit relativ höherem Schmelzpunkt, aufgetragen wird.

2. Verfahren nach Anspruch 1, dadurch gekennzeichnet, daß Zink, Aluminium oder eine Zink/Aluminium-Legierung oder entsprechende Oxide als das Metall mit relativ niedrigerem Schmelzpunkt verwendet wird.

3. Verfahren nach Anspruch 1 oder 2, dadurch gekennzeichnet, daß die Zwischenschicht aus einem kunststoffvergüteten Material besteht.

4. Verfahren nach einem der Ansprüche 1 bis 3, dadurch gekennzeichnet, daß die Zwischenschicht als Glättungsschicht, die eine gewisse Restrauhigkeit aufweisen kann, ausgebildet ist.

5. Verfahren nach einem der Ansprüche 1 bis 4, dadurch gekennzeichnet, daß bei Anwendung einer auf die Bauteiloberfläche aufgetragenen bzw. aufzutragenden Zwischenschicht diese aus einem Material von höherer Temperaturbeständigkeit als der Temperaturbeständigkeit des Substrates, insbesondere von Beton, besteht.

6. Verfahren nach einem der Ansprüche 1 bis 5, dadurch gekennzeichnet, daß die ggf. gereinigte Substratoberfläche zunächst mit einem Haftvermittler versehen wird und alle anderen Schichten nachfolgend aufgetragen werden.

7. Verfahren nach einem der Ansprüche 1 bis 6, dadurch gekennzeichnet, daß die äußerste Metallschicht mit einer Oberflächenglättungsschicht versehen wird.

8. Verfahren nach einem der Ansprüche 1 bis 7, dadurch gekennzeichnet, daß die äußerste Metallschicht mit einer insbesondere als Oberflächenglättungsschicht dienenden dampfdiffusionsdurchlässigen Schicht versehen wird.

9. Verfahren nach einem der Ansprüche 1 bis 8, dadurch gekennzeichnet, daß die äußerste Metallschicht mit einer, insbesondere als Oberflächenglättungsschicht dienenden Schicht aus einem Kunststoff, insbesondere aus Epoxydharz, versehen wird.

10. Verfahren nach einem der Ansprüche 1 bis 10, dadurch gekennzeichnet, daß es als Sanierungsmaßnahme an Bauten aus Beton, Stahlbeton oder anderen hydraulisch abgebundenen Substraten auf Mineralbasis, insbesondere auf der Innenfläche von Behältern, angewendet wird.

11. Oberflächenbehandelter Baukörper, insbesondere Behälter, aus Beton, Stahlbeton oder anderen hydraulisch abgebundenen Substraten auf Mineralbasis mit einem mehrschichtigen Überzug, zumindest bestehend aus zwei mittels thermischen Spritzens aufgetragenen Schichten aus Metall oder Metalloxid, dadurch gekennzeichnet, daß eine hydraulisch abbindende oder wasserglasgebundene Zwischenschicht vorgesehen ist und nach außen nachfolgend die innere der mindestens zwei Schichten aus Metall aus einem Metall mit relativ niedrigerem und die äußere der mindestens zwei Schichten aus Metall aus Edelstahl, als Metall mit einem relativ höheren Schmelzpunkt als die darunterliegende Metallschicht, besteht.

12. Oberflächenbehandelter Baukörper nach Anspruch 11, dadurch gekennzeichnet, daß es einen mehrschichten Oberflächenschichtenaufbau nach Maßgabe einer der Ansprüche 1 bis 10 aufweist.

## Claims

1. A process for the surface treatment of structures, in particular, receptacles, made of concrete, reinforced concrete or other hydraulically hardened mineral-based substrates, in which process the surface is - optionally after a cleaning stage - provided with a multilayer covering having at least two layers composed of metal or metal oxide, these layers being applied by thermal spraying, in particular by flame spraying, characterised in that an hydraulically hardening or a water-glass-bound intermediate layer is applied to the surface initially and subsequently a metal with a relatively lower melting point is applied and subsequently a layer of special steel, as a metal with a relatively higher melting point, is applied.

2. A process in accordance with Claim 1, characterised in that zinc, aluminium or a zinc/aluminium alloy or corresponding oxides are used as the metal with a relatively lower melting point.

3. A process in accordance with Claim 1 or 2, characterised in that the intermediate layer is composed of a material coated with a plastics material.

4. A process in accordance with any one of Claims 1 to 3, characterised in that the intermediate layer is in the form of a smoothing layer which has a certain residual roughness.

5. A process in accordance with any one of Claims 1 to 4, characterised in that when using an intermediate layer which has been applied or is to be applied to the surface of the structural member, this intermediate layer is composed of a material having greater temperature resistance than the substrate composed in particular of concrete.

6. A process in accordance with any one of Claims 1 to 5, characterised in that the optionally cleaned substrate surface is provided with an adhesion promoter initially and all other layers are applied subsequently.

7. A process in accordance with any one of Claims 1 to 6, characterised in that the outermost metal layer is provided with a surface smoothing layer.

8. A process in accordance with any one of Claims 1 to 7, characterised in that the outermost metal layer is provided with a layer permeable to vapour diffusion and serving in particular as surface smoothing layer.

9. A process in accordance with any one of Claims 1 to 8, characterised in that the outermost metal layer is provided with a layer of a plastics material, in particular epoxy resin, serving in particular as a surface smoothing layer.

10. A process in accordance with any one of Claims 1 to 10, characterised in that it is used as a renovation measure on structures made of concrete, reinforced concrete or other hydraulically hardened mineral-based substrates, in particular on the inner surface of receptacles.

11. A surface-treated structure, in particular a receptacle, made of concrete, reinforced concrete or other hydraulically hardened mineral-based substrates having a multilayer covering consisting of at least two metal or metal oxide layers applied by means of thermal spraying, characterised in that an hydraulically hardening or water-glass-bound intermediate layer is provided and thereabove in an outwards direction the inner layer of the at least two metal layers is composed of a metal with a relatively lower melting point and the outer layer of the at least two metal layers is composed of special steel as a metal with a relatively higher melting point than the metal layer lying thereunder.

12. A surface-treated structure in accordance with Claim 11, characterised in that it has a multilayer surface layer construction in accordance with one of Claims 1 to 10.

## Revendications

1. Procédé de traitement des surfaces de constructions en béton, en béton armé ou d'autres substrats de base minérale à prise hydraulique, en particulier de récipients, dans lequel la surface, éventuellement après une opération de nettoyage, est dotée d'un revêtement multicouche et ce revêtement présente au moins deux couches en métal ou en oxyde de métal, ces couches étant déposées par projection thermique, en particulier par procédé de projection des métaux fondus, caractérisé en ce que sur la surface, il est tout d'abord déposé une couche intermédiaire à prise hydraulique ou à prise par verre soluble et ensuite un métal avec un point de fusion relativement bas, puis une couche en acier fin, en tant que métal ayant un point de fusion relativement élevé.

2. Procédé selon la revendication 1, caractérisé en ce que le zinc ou l'aluminium ou un alliage de zinc/aluminium ou un oxyde correspondant est utilisé comme métal avec un point de fusion relativement bas.

3. Procédé selon la revendication 1 ou 2, caractérisé en ce que la couche intermédiaire se compose d'une matière enrichie en matière synthétique.

4. Procédé selon l'une des revendications 1 à 3, caractérisé en ce que la couche intermédiaire est conçue comme une couche de lissage qui peut présenter un certain reste de rugosité.

5. Procédé selon l'une des revendications 1 à 4, caractérisé en ce que lors de l'utilisation d'une couche intermédiaire déposée resp. à déposer sur la surface de la construction, celle-ci se compose d'une matière présentant une résistance thermique plus élevée que la résistance thermique du substrat, en particulier du béton.

6. Procédé selon l'une des revendications 1 à 5, caractérisé en ce que la surface du substrat ayant éventuellement subi un nettoyage est tout d'abord dotée d'un agent adhésif et ensuite toutes les autres couches sont déposées.

7. Procédé selon l'une des revendications 1 à 6, caractérisé en ce que la couche de métal la plus à l'extérieur est dotée d'une couche de lissage de surface.

8. Procédé selon l'une des revendications 1 à 7, caractérisé en ce que la couche de métal la plus à l'extérieur est dotée d'une couche perméable à la diffusion de vapeur, faisant office en particulier, de couche de lissage de surface.

9. Procédé selon l'une des revendications 1 à 8, caractérisé en ce que la couche de métal la plus à l'extérieur est dotée d'une couche faisant office, en particulier, de couche de lissage de surface, qui se compose d'une matière synthétique, en particulier, de la résine Epoxy.

10. Procédé selon l'une des revendications 1 à 9, caractérisé en ce qu'il est appliqué des mesures de rénovation à des constructions en béton, béton armé ou autres substrats de base minérale à prise hydraulique, en particulier, sur la surface interne de récipients.

11. Corps de construction aux surfaces traitées, en particulier des récipients en béton, béton armé ou autres substrats de base minérale à prise hydraulique, avec un revètement multicouche, se composant au moins de deux couches en métal ou oxyde de métal, déposées par projection thermique, caractérisé en ce qu'il est prévu une couche intermédiaire à prise hydraulique ou à prise par verre soluble et vers l'extérieur, à la suite la couche interne d'au moins deux couches métalliques se compose de métal ayant un point de fusion relativement plus bas et la couche externe d'au moins deux couches métalliques se compose d'acier fin métal présentant un point de fusion relativement plus élevé que la couche de métal se trouvant en dessous.

12. Corps de construction aux surfaces traitées selon la revendication 11, caractérisé en ce qu'il présente une structure de couches de surface multicouche selon la définition de l'une des revendications 1 à 10.
